# EUROPÄISCHE PATENTSCHRIFT

(11) **EP 1 126 257 B1**
(45) Veröffentlichungstag und Bekanntmachung des Hinweises auf die Patenterteilung: **09.11.2005**
(21) Anmeldenummer: 01102621.8
(22) Anmeldetag: 07.02.2001
(51) Int. Cl.: G01J 3/32, G02B 21/00, G01J 3/36, G01J 3/457

(54) **Vorrichtung zur Selektion und Detektion mindestens eines Spektralbereichs eines spektral aufgefächerten Lichtstrahls**
Device for selecting and detecting at least one spectral domain of a spectrally separated light beam
Dispositif de sélection et de détection d'au moins un domaine spectral d'un faisceau lumineux spectralement décomposé

(30) Priorität: 15.02.2000 DE 10006800
(43) Veröffentlichungstag der Anmeldung: 22.08.2001
(73) Patentinhaber: Leica Microsystems CMS GmbH, 35578 Wetzlar (DE)
(72) Erfinder: Engelhardt, Johann, Dr., 76669 Bad Schönborn (DE); Hay, William C., 64646 Heppenheim (DE); Hoffmann, Jürgen, Dr., 65191 Wiesbaden (DE)
(74) Vertreter: Reichert, Werner Franz

(56) Entgegenhaltungen:
- DE-A- 4 330 347
- DE-A- 19 842 288
- DE-A- 19 902 625
- DE-C- 505 397
- US-A- 5 504 575

## Beschreibung

Die vorliegende Erfindung betrifft eine Vorrichtung zur Selektion und Detektion mindestens eines Spektralbereichs eines spektral aufgefächerten Lichtstrahls, vorzugsweise im Strahlengang eines konfokalen Rastermikroskops, wobei der aufgefächerte Lichtstrahl in einer Fokallinie fokussierbar ist.

Vorrichtungen der gattungsbildenden Art sind aus der DE 198 42 288, der DE 43 30 347 und der DE 199 02 625 bekannt. Diese Vorrichtungen werden vorzugsweise im Strahlengang konfokalerLaserscanning-Mikroskope eingesetzt. Hierbei wird ein das Detektionspinhole passierender Lichtstrahl mit einem dispersiven optischen Bauteil spektral aufgefächert. Ein Teil des spektral aufgefächerten Lichtstrahls kann dann eine erste variabel angeordnete Spiegelblendenanordnung passieren. Der entsprechende spektrale Bereich wird dann von einem Detektor detektiert. Der Anteil des aufgefächerten Lichtstrahls, der auf die erste Spiegelblendenanordnung auftrifft, wird an ihr zu einer weiteren Spiegelblendenanordnung reflektiert. Auch an der weiteren Spiegelblendenanordnung kann ein Teil des ursprünglich reflektierten spektral aufgefächerten Lichtstrahls passieren, der mit einem weiteren Detektor detektiert wird. Der verbleibende Teil wird mit der weiteren Spiegelblendeneinrichtung zu einem dritten Detektor reflektiert.

Vorrichtungen der gattungsbildenden Art weisen mehrere Nachteile auf. Eine spektral exakte Detektion des spektral aufgefächerten Lichtstrahls ist streng genommen nur möglich, wenn der aufgefächerte Lichtstrahl direkt auf eine Fokallinie fokussiert wird, auf der eine Selektion der zu detektierenden Spektralbereiche erfolgt. Vor oder hinter der Fokallinie überlappen die Spektralbereiche des spektral aufgefächerten Lichtstrahls, so dass eine scharfe spektrale Detektion nur eingeschränkt möglich ist. Die aus dem Stand derTechnik bekannten Vorrichtungen sehen eine Aufspaltung in die einzelnen Spektralbereiche lediglich in der näheren Umgebung der Fokuslinie vor, wo eine Selektion der zu detektierenden Spektralbereiche im Hinblick auf die spektrale Überlappung noch tolerabel ist. Bei einer höheren Anzahl der zu detektierenden Bereiche ist aufgrund der kaskadierten Detektoranordnung darüber hinaus eine erneute Fokussierung des selektierten Spektralbereichs notwendig, da ansonsten die optischen Wege des divergent verlaufenden Lichtstrahls sich nicht mehr auf einen Detektor mit begrenzter Fläche abbilden läßt. Hierbei ist vor allem die räumliche Anordnung der optischen Komponenten und Detektoren aufgrund der optischen Randbedingungen äußerst problematisch, so dass nur eine begrenzte Anzahl verschiedener Spektralbereiche detektierbar sind. Des weiteren ist die Fehlertoleranz der Positionierung der optischen Komponenten der bislang bekannten Vorrichtungen aufgrund ihrer kaskadierten Anordnung äußerst gering. So wirkt sich beispielsweise die Dejustage einer ersten im spektral aufgefächerten Lichtstrahl angeordneten Spiegelblende negativ auf sämtliche ihr nachgeordneten Detektoren aus, was deren Detektionseffizienz reduziert.

Der Erfindung liegt daher die Aufgabe zugrunde, eine Vorrichtung zur Selektion und Detektion mindestens eines Spektralbereichs eines spektral aufgefächerten Lichtstrahls, vorzugsweise im Strahlengang eines konfokalen Rastermikroskops, derart auszugestalten und weiterzubilden, dass bei der Selektion des spektral aufgefächerten Lichtstrahls die selektierten Spektralbereiche sich nicht überlappen. Darüber hinaus soll eine Detektion mit mehr als die bislang realisierbare Anzahl von Detektoren möglich sein. Auch soll die Fehlertoleranz betreffend der Anordnung der optischen Bauteile erhöht werden.

Die erfindungsgemäße Vorrichtung der gattungsgemäßen Art löst die voranstehende Aufgabe durch die Merkmale des Patentanspruchs 1. Danach ist eine solche Vorrichtung dadurch gekennzeichnet, dass im aufgefächerten Lichtstrahl ein den Lichtstrahl zu einem Detektor reflektierendes und optisches Bauteil angeordnet ist, dessen optisch wirksamer Bereich sich entlang der Oberfläche verkleinert oder vergrößert, so dass durch Ausrichtung des Bauteils zur Fokallinie und die sich daraus ergebende Überdeckung von Fokallinie und Oberfläche der zum Detektor gelangende Spektralbereich definierbar ist.

Erfindungsgemäß ist zunächst erkannt worden, dass bei einer nicht kaskadiert angeordneten Spiegelblenden- und Detektorvorrichtung die gesamte Vorrichtung erheblich vereinfacht werden kann. Die zusätzliche Fokussierung kann entfallen, da sich die optischen Wege des divergent verlaufenden Lichts um den Anteil reduziert, der für die Kaskadierung der Detektoranordnung vorzusehen ist. Das divergent verlaufende Licht muß dann nicht mehr fokussiert werden, um auf einen Detektor mit einer begrenzten Detektionsfläche abgebildet zu werden. Darüber hinaus kann durch Vermeidung der kaskadierten Detektionsvorrichtung die Fehlertoleranz der Positionierung der optischen Bauteile erhöht werden, da nicht mehrso viele voneinander abhängige optische Komponenten im Strahlengang vorgesehen sind. Das ist für die Toleranzkette der Positionier- und Justiergenauigkeit der einzelnen optischen Bauteile in gleicher Weise von großem Vorteil.

Auf eine kaskadierte Anordnung der optischen Bauteile kann in erfindungsgemäßer Weise durch die besondere Ausrichtung eines reflektierenden und/oder brechenden optischen Bauteils verzichtet werden. Dieses optische Bauteil wird relativ zur Fokallinie des spektral aufgefächerten Lichtstrahls derart angeordnet und ausgerichtet, dass lediglich der sich aus der Überdekkung von Fokallinie und Oberfläche des optischen Bauteils ergebende spektrale Bereich zum Detektor reflektiert wird. Eine Kaskadierung mehrerer hintereinander angeordneter optischer Bauteile kann hierdurch vermieden werden, wodurch in vorteilhafter Weise auf eine zusätzliche Fokussierung des reflektierten bzw. gebrochenen Lichtstrahls verzichtet werden kann.

Das optische Bauteil ist derart ausgestaltet, dass dessen optisch wirksamer Bereich sich entlang seiner Oberfläche verkleinert oder vergrößert. Hierdurch ist entsprechend der Ausrichtung des optischen Bauteils relativ zur Fokallinie der vom optischen Bauteil reflektierte Anteil des spektral aufgefächerten Lichts verkleinerbar bzw. vergrößerbar. Mit der erfindungsgemäßen Vorrichtung ist es möglich, die spektrale Selektion mit Hilfe von reflektierenden optischen Bauteilen direkt in der Fokallinie durchzuführen, so dass die oben erwähnte spektrale Überlappung, die schon in der näheren Umgebung der Fokallinie auftritt, in vorteilhafter Weise vermieden werden kann.

In einer bevorzugten Ausführungsform ist die Oberfläche des optischen Bauteils in ihrem Bereich der Überdeckung mit der Fokallinie stets tangential zur Fokallinie angeordnet. Mit anderen Worten liegt die Fokallinie des spektral aufgefächerten Lichtstrahls stets auf der Oberfläche des optischen Bauteils. Durch diese Anordnung des optischen Bauteils ist eine spektral scharfe Detektion sichergestellt, da so stets in einem Bereich des spektral aufgefächerten Lichtstrahls selektiert wird, bei dem die Spektralbereiche sich nicht überlappen.

In besonders vorteilhafter Weise ist das optische Bauteil beweglich angeordnet, um eine variable Selektion des Spektralbereichs zu ermöglichen.

Die Bewegung des optischen Bauteils könnte entlang einer Richtung erfolgen, so dass sich der wirksame Bereich des optischen Bauteils relativ zur Fokallinie verändert, wodurch sich der zum Detektor gelangende Spektralbereich vergrößert oder verkleinert. Hierdurch kann in vorteilhafter Weise die Anfangs- und Endwellenlänge verändert werden, also die Breite des Spektralbereichs, der zu dem dem optischen Bauteil zugeordneten Detektor gelangt.

Das optische Bauteil könnte in einerzur Fokallinie parallelen Richtung bewegt werden, wodurch der zum Detektor gelangende Spektralbereich veränderbar ist. Durch diese Bewegung kann der selektierte Spektralbereich bei gleichbleibender Breite verändert werden. Letztendlich kann somit die Anfangs- und Endwellenlänge des Spektralbereichs variiert werden, wobei die Differenz von Endwellenlänge zu Anfangswellenlänge, d.h. die spektrale Breite, konstant bleibt. Zur Optimierung der detektierten Signalausbeute ist vorgesehen, dass bei einer Bewegung des optischen Bauteils in einer zur Fokallinie parallelen Richtung der dem optischen Bauteil zugeordnete Detektor in gleicher Weise bewegt wird.

In besonders vorteilhafter Weise erfolgt die Bewegung des optischen Bauteils sowohl entlang einer Richtung, in der sich der wirksame Bereich des optischen Bauteils relativ zur Fokallinie verändert, als auch in einer zur Fokallinie parallelen Richtung. Hierdurch ist die Breite wie auch die Anfangs- und Endwellenlänge nicht beanspruchten des zu detektierenden Spektralbereichs definierbar, was ganz besonders flexible Anwendungsmöglichkeiten eröffnet.

Wenn zur Selektion mehrerer Spektralbereiche mehrere optische Bauteile verwendet werden, sind die optischen Bauteile derart angeordnet, dass sie sich an der Stelle der Fokallinie berühren. Diese Anordnung ermöglicht eine lückenlose Detektion des spektral aufgefächerten Lichtstrahls mit mehreren Detektoren.

Alternativ hierzu könnte auch entlang der Fokallinie zwischen zwei optischen Bauteilen einen Zwischenraum verbleiben. Das in diesem Zwischenraum verlaufende Licht würde somit keinem Detektor zugeordnet werden, so dass der entsprechende spektrale Bereich nicht detektiert wird. Insbesondere bei einer fluoreszenzmikroskopischen Anwendung mit einem konfokalen Laserscanning-Mikroskop wäre ein solcher Zwischenraum an der Stelle der Anregungswellenlänge einer Laserlichtquelle vorgesehen, da lediglich das Fluoreszenzlicht von Interesse ist bzw. detektiert wird.

In einer alternativen Ausführungsform könnte das in einem Zwischenraum verlaufende Licht von einem Detektor detektiert werden, der diesem Zwischenraum zugeordnet ist. Diese Maßnahme könnte vor allem die räumliche Anordnung mehrerer Detektoren erleichtern, insbesondere dann, wenn die verwendeten optischen Bauteile reflektierend ausgeführt sind. Der einem Zwischenraum zugeordnete Detektor könnte somit jenseits der Fokallinie in Ausbreitungsrichtung des spektral aufgefächerten Lichtstrahls angeordnet sein, wohingegen die den reflektiert ausgeführten optischen Bauteilen zugeordneten Detektoren in Richtung des reflektierten Lichts angeordnet werden können. Die Anordnung der Detektoren, die verglichen zur Ausdehnung der Fokallinie groß sind, kann hierdurch über einen großen Raumwinkelbereich erfolgen.

Hinsichtlich der durch die Fokallinie und den Hauptstrahl des einfallenden Lichts aufgespannte Auffächerungsebene könnten die optischen Bauteile von beiden Seiten der Auffächerungsebene eingebracht werden. So wäre eine Gruppierung mehrerer nebeneinander angeordneter optischer Bauteile denkbar, die von der einen Seite der Auffächerungsebene angeordnet und ausgerichtet werden. Eine weitere Gruppierung mehrerer nebeneinander angeordneter optischer Bauteile könnte dementsprechend von der anderen Seite der Auffächerungsebene angeordnet werden, so dass die optischen Bauteile einer Seite der Auffächerungsebene einen ggf. kontinuierlichen Spektralbereich überdecken können. In einer alternativen Ausführungsform hierzu ist eine abwechselnde Anordnung der optischen Bauteile vorgesehen, so dass entlang der Fokallinie ein optisches Bauteil von der einen Seite der Auffächerungsebene angeordnet ist, dem ein optisches Bauteil benachbart ist, das von der anderen Seite der Auffächerungsebene angeordnet ist.

In einer nicht beanspruchten Ausführungsform weist das optische Bauteil eine ebene Oberfläche auf. Zur Verkleinerung bzw. Vergrößerung des optisch wirksamen Bereichs entlang der Oberfläche des optischen Bauteils sind dessen Kanten verjüngend ausgebildet. Die hierdurch festgelegte Oberflächenform würde dann beispielsweise einem Trapez entsprechen. Die Kanten des optischen Bauteils könnten sich in einem Kantenschnittpunkt treffen, wodurch die Oberfläche des optischen Bauteils die Form eines Dreiecks aufweisen würde.

Die optischen Bauteile können derart bewegbar angeordnet sein, dass die Kantenschnittpunkte mehrerer nebeneinander angeordneter optischer Bauteile sich in einer Grundeinstellung im wesentlichen in einem Punkt treffen. Aus dieser Grundeinstellung heraus könnte dann die sukzessive Anordnung der einzelnen optischen Bauteile relativ zur Fokallinie erfolgen. Die Bewegung eines optischen Bauteils kann aus Platzgründen eine Bewegung anderer optischer Bauteile nach sich ziehen.

Als Form eines optischen Bauteils könnte ein Keil, eine Pyramide, ein Tetraeder oder ein Obelisk vorgesehen sein. Eine Verwendung von optischen Bauteilen unterschiedlicher Formen wäre ebenfalls denkbar.

In einer nicht beanspruchten Ausführungsform ist das optische Bauteil als Spiegel ausgeführt, der das auf seiner Oberfläche auftreffende Licht reflektiert. Der Spiegel könnte bspw. aus einem keilförmigen Bauteil bestehen, auf dessen Oberfläche eine Spiegelschicht aufgebracht ist. Wenn die Oberfläche des Spiegels eben ausgeführt ist, erfolgt die Bewegung des Bauteils relativ zur Fokallinie stets in einer Richtung, die in der Ebene der Spiegeloberfläche liegt.

In der erfindungsgemäßen Ausführungsform weist der Spiegel eine zylindrische Oberfläche auf. Hierbei könnte das optische Bauteil die Form eines schräg abgeschnittenen Kreiszylinders oder die eines Zylinderabschnitts aufweisen. Der entsprechende Zylindermantelabschnitt ist hierbei mit einer reflektierenden Oberfläche versehen, so dass der optisch wirksame Bereich dieses Zylindermantelabschnitts entlang seiner Oberfläche verkleinert bzw. vergrößert ausgebildet ist.

Die zylinderförmigen optischen Bauteile sind auf einer Achse geführt, die parallel zur Fokallinie angeordnet ist. Diese Führungsachse fällt mit der Achse eines schräg abgeschnittenen Kreiszylinders bzw. eines Zylinderabschnitts zusammen. Der Abstand einer Führungsachse der zylinderförmigen optischen Bauteile zur Fokallinie entspricht dem Radius der zylinderförmigen optischen Bauteile. Hierdurch ist gewährleistet, dass die zylinderförmige Oberfläche des optischen Bauteils in ihrem Bereich der Überdeckung mit der Fokallinie stets tangential zur Fokallinie angeordnet sind.

Unter Berücksichtigung der bislang erwähnten unterschiedlichen Anordnungsmöglichkeiten der optischen Bauteile sind bei der Verwendung zylinderförmiger Bauteile mehrere Achsen vorgesehen, auf denen die zylinderförmigen optischen Bauteile geführt sind. Die Abstände der einzelnen Achsen zur Fokallinie können unterschiedlich sein.

Durch die Drehung eines zylinderförmigen optischen Bauteils um seine Achse kann der zum Detektor gelangende Spektralbereich vergrößert oder verkleinert werden. Wenn das zylinderförmige optische Bauteile entlang der Richtung seiner Führungsachse bewegt wird, kann der zum Detektor gelangende Spektralbereich bei gleichbleibender spektraler Breite verändert werden. Eine Überlagerung beider Bewegungsformen eines zylinderförmigen optischen Bauteils - also die Drehung um seine Achse und die Bewegung entlang der Richtung seiner Achse - ermöglicht eine flexible Selektion eines Spektralbereichs, so dass dieser in seiner Breite wie auch in seiner Lage entlang der Fokallinie prinzipiell frei einstellbar ist.

Bezüglich der räumlichen Anordnung der Detektoren ist es vorteilhaft, wenn die Oberflächennormalen der verschiedenen optischen Bauteile am Ort der Fokallinie in unterschiedliche Richtungen zeigen. Dies ist insbesondere bei der Verwendung von als Spiegel ausgeführte optische Bauteile relevant. In diesem Fall ist der einem optischen Bauteil zugeordnete Detektor in Richtung des Hauptstrahls des reflektierten Lichts angeordnet. Hierdurch ist die Anordnung einer großen Anzahl von Detektoren möglich, da durch die Orientierung der Oberflächennormalen der einzelnen optischen Bauteile nahezu der gesamte Raumwinkelbereich quer zur Fokallinie zur Verfügung steht.

Bei der Verwendung zylinderförmiger optischer Bauteile gibt die Anzahl der verwendeten Führungsachsen die unterschiedlichen Richtungen der möglichen Oberflächennormalen vor. In zweckmäßiger Weise könnten die Achsen in unterschiedlichen Abständen zu der Fokallinie angeordnet werden, d.h. die Zylinderoberflächen der Bauteile unterschiedlicher Achsen weisen einen unterschiedlichen Krümmungsradius auf. Zusätzlich könnten entlang der Fokallinie die zylindrischen optischen Bauteile unterschiedlicher Führungsachsen nebeneinander angeordnet sein. In diesem Fall werden die Detektoren direkt benachbarter zylinderförmiger optischer Bauteile in unterschiedlichen Richtungen angeordnet, so dass durch geschickte Anordnung der zylindrischen optischen Bauteile ebenfalls der Einsatz vieler Detektoren möglich ist.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung der bevorzugten Ausführungsbeispiele der Erfindung anhand der Zeichnung zu verweisen. In Verbindung mit der Erläuterung der bevorzugten Ausführungsbeispiele der Erfindung anhand der Zeichnung werden auch im allgemeinen bevorzugte Ausgestaltungen und Weiterbildungen der Lehre erläutert. In der Zeichnung zeigt
- Fig. 1: eine schematische dreidimensionale Darstellung einer erfindungsgemäßen Ausführungsform,
- Fig. 2: eine Draufsicht einer schematischen Darstellung eines alternativen erfindungsgemäßen Ausführungsbeispiels,
- Fig. 3: eine schematische Seitenansicht des Ausführungsbeispiels aus der Fig. 2,
- Fig. 4: eine schematische Seitenansicht zu dem Ausführungsbeispiel aus den Fig. 2 und 3,
- Fig. 5: eine schematische Draufsicht des Ausführungsbeispiels aus der Fig. 2, bei dem die einzelnen optischen Bauteile unterschiedlich angeordnet sind,
- Fig. 6: eine schematische Seitenansicht des Ausführungsbeispiels aus der Fig. 5,
- Fig. 7: eine schematische Seitenansicht des Ausführungsbeispiels aus den Fig. 5 und Fig. 6,
- Fig. 8: eine schematische Darstellung einer nicht beanspruchten Ausgestaltung eines optischen Bauteils,
- Fig. 9: eine schematische Seitenansicht der Ausgestaltung gemäß Fig. 8,
- Fig. 10: in einer schematischen dreidimensionalen Ansicht eine nicht beanspruchte Ausgestaltung der Vorrichtung zur Selektion und Detektion vom meheren Spektralbereichen,
- Fig. 11: in einer schematischen Darstellung die Draufsicht eines weiteren Ausführungsbeispiels der erfindungsgemäßen Vorrichtung und
- Fig. 12: eine schematische dreidimensionale Seitenansicht eines optischen Bauteils aus der Fig. 11.

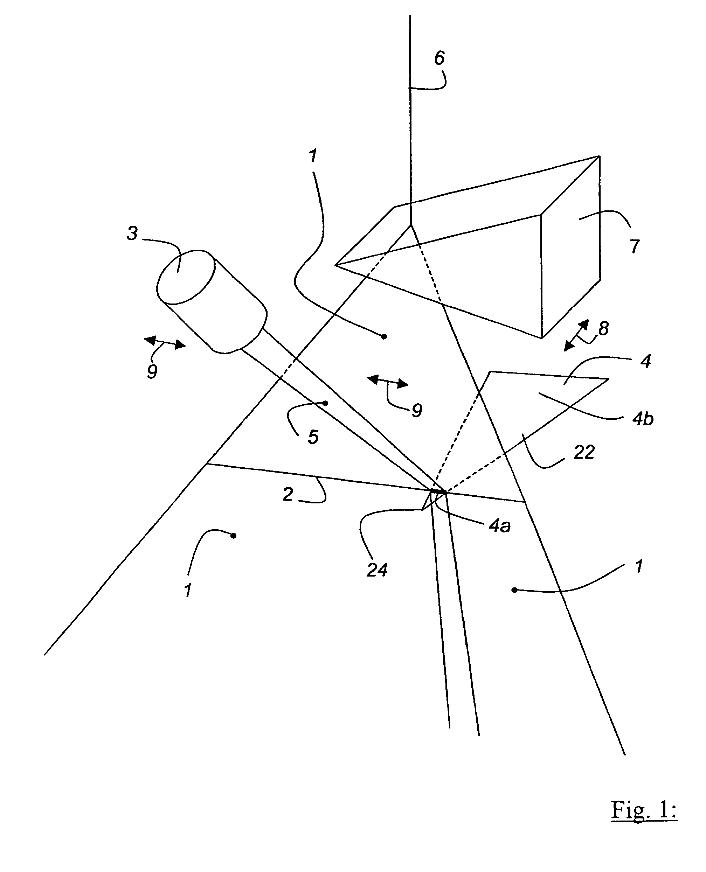

Die Fig. 1 zeigt eine Vorrichtung zur Selektion und Detektion mindestens eines Spektralbereichs eines spektral aufgefächerten Lichtstrahls 1 im Strahlengang eines konfokalen Rastermikroskops, wobei der aufgefächerte Lichtstrahl 1 in einer Fokallinie 2 fokussierbar ist.

Erfindungsgemäß ist im aufgefächerten Lichtstrahl 1 ein den Lichtstrahl zu einem Detektor 3 reflektierendes und/oder brechendes optisches Bauteil 4 angeordnet, dessen optisch wirksamer Bereich 4a sich entlang der Oberfläche 4b verkleinert oder vergrößert, so dass durch Ausrichtung des Bauteils 4 zur Fokallinie 2 und die sich daraus ergebende Überdeckung von Fokallinie 2 und Oberfläche der zum Detektor 3 gelangende Spektralbereich 5 definierbar ist. Der Fig. 1 ist darüber hinaus entnehmbar, dass der einfallende Lichtstrahl 6 von einem im Strahlengang 6 angeordneten Prisma 7 spektral zerlegt wird.

Das optische Bauteil 4 ist derart angeordnet, dass seine Oberfläche 4b in dem Bereich der Überdekkung mit der Fokallinie 2 stets tangential zur Fokallinie 2 ist.

Das optische Bauteil 4 ist beweglich angeordnet. Die Bewegung des optischen Bauteils 4 kann entweder entlang einer Richtung 8 oder entlang einer Richtung 9 erfolgen. Wenn das optische Bauteil 4 entlang der Richtung 8 bewegt wird, verändert sich der wirksame Bereich des optischen Bauteils 4 relativ zur Fokallinie 2. Hierdurch wird der zum Detektor 3 gelangende Spektralbereich 5 vergrößert oder verkleinert. Wenn das optische Bauteil 4 in einer zur Fokallinie 2 parallelen Richtung 9 bewegt wird, kann der zum Detektor 3 gelangende Spektralbereich 5 bei gleichbleibender Breite hinsichtlich seines Anfangs- bzw. Endpunkts verändert werden.

Wenn das optische Bauteil 4 entlang der Richtung 9 bewegt wird, wird in gleicher Weise der dem optischen Bauteil 4 zugeordnete Detektor 3 bewegt. Diese Bewegung erfolgt ebenfalls entlang der Richtung 9.

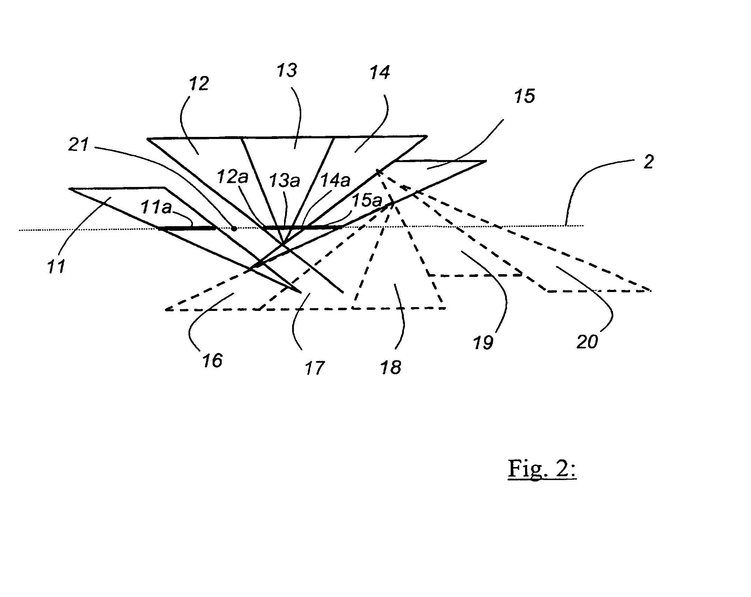

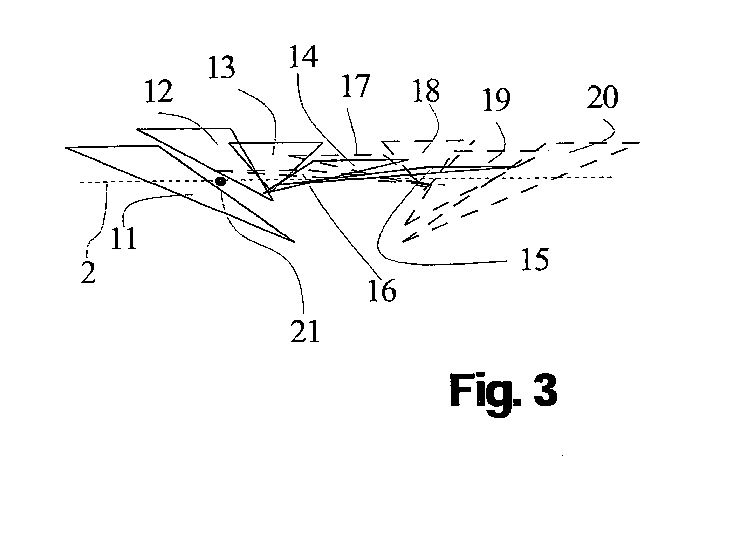

Eine alternative Ausführungsform der erfindungsgemäßen Vorrichtung ist den Fig. 2 und 3 entnehmbar. Mehrere optische Bauteile 12, 13, 14 und 15 sind derart angeordnet, dass sie sich an der Stelle der Fokallinie 2 berühren. Hierdurch ist für den wirksamen Bereich 12a, 13a, 14a, 15a der optischen Bauteile 12, 13, 14 und 15 eine lückenlose Detektion des spektral aufgefächerten Lichtstrahls 1 möglich. In gleicher Weise berühren sich die gestrichelt eingezeichneten optischen Bauteile 16, 17, 18, 19 und 20, so dass auch dieser entsprechende spektrale Bereich der Fokallinie 2 lückenlos detektierbar ist. Zwischen dem optischen Bauteil 11 mit seinem wirksamen Bereich 11a und dem optischen Bauteil 12 ist ein Zwischenraum 21 vorgesehen, der nicht von einem optischen Bauteil reflektiert oder gebrochen wird.

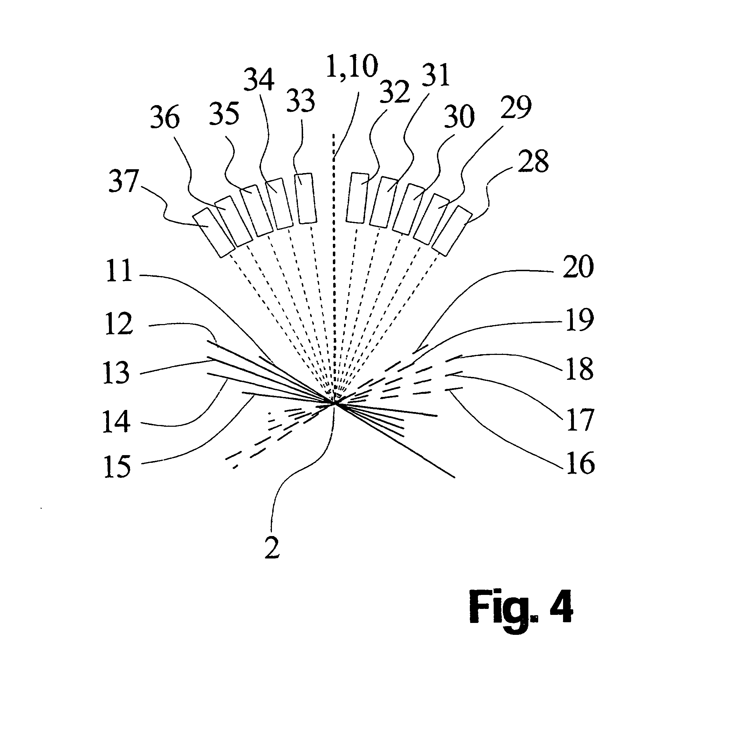

Der spektral aufgefächerte Lichtstrahl 1 und die Fokallinie 2 spannen die Auffächerungsebene 10 auf. Der schematischen Seitenansicht aus Fig. 4 ist entnehmbar, dass die optischen Bauteile 11 bis 15 von der einen Seite der Auffächerungsebene 10 eingebracht werden, die optischen Bauteile 16 bis 20 von der anderen Seite der Auffächerungsebene 10 eingebracht werden. In der Fig. 4 sind lediglich die Oberflächen der optischen Bauteile 11 bis 20 angedeutet, die in der Seitenansicht somit als Strecke eingezeichnet sind. Die optischen Bauteile 11 bis 20 aus den Fig. 2, 3 und 4 weisen eine ebene Oberfläche auf.

Den Fig. 1 bis 3 ist entnehmbar, dass die Kanten 22 und 23 des optischen Bauteils 4 verjüngend ausgebildet sind und darüber hinaus sich in einem Kantenschnittpunkt 24 treffen. Das optische Bauteil 4 weist eine dreieckige Oberfläche 4b auf.

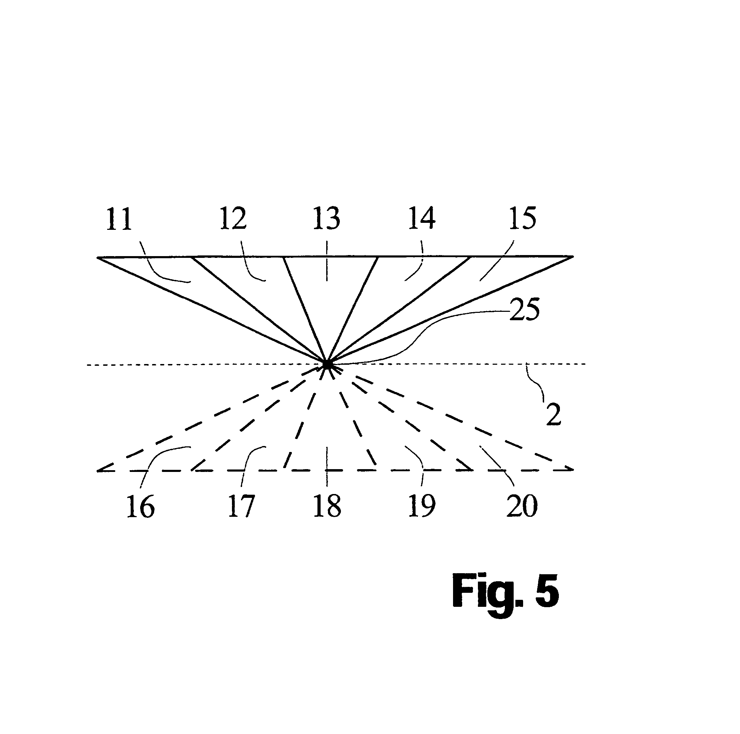

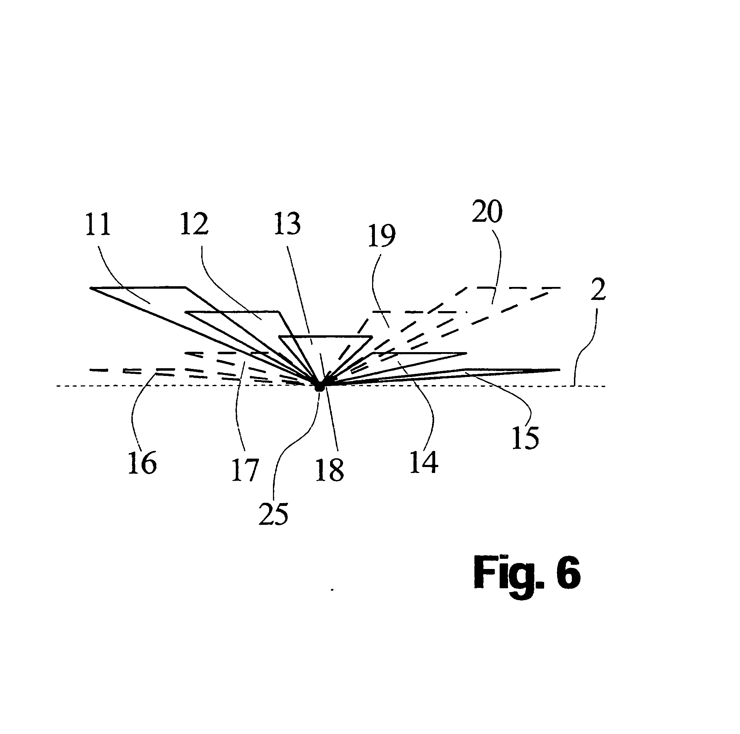

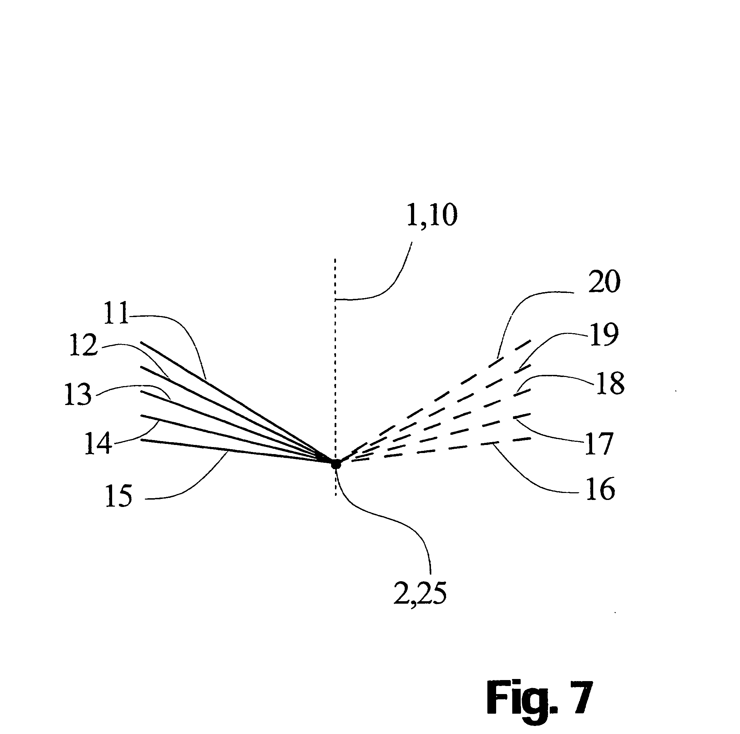

Die Fig. 5, 6 und 7 zeigen das Ausführungsbeispiel der Fig. 2, 3 und 4 in einer anderen Einstellung der optischen Bauteile 11 bis 20. Insbesondere der Fig. 5 und 7 ist entnehmbar, dass die Kantenschnittpunkte mehrerer, nebeneinander angeordneter optischer Bauteile 11, 12, 13, 14, 15 sowie 16, 17, 18, 19, 20 sich in einer Grundeinstellung im wesentlichen in einem Punkt 25 treffen. Punkt 25 liegt auf der Fokuslinie 2, so dass in diesem Fall kein Anteil des spektral aufgefächerten Lichtstrahls 1 zu einem der den optischen Bauteilen 11 bis 20 zugeordneten Detektoren gelangt. Diese Grundeinstellung wird in diesem Ausführungsbeispiel zur spektralen Kalibrierung der Bauteile 11 bis 20 verwendet.

Die Form der optischen Bauteile 11 bis 20 ist als Keil ausgeführt, in den Fig. 2 bis 7 sind jedoch lediglich die Oberflächen der einzelnen keilförmigen optischen Bauteile eingezeichnet.

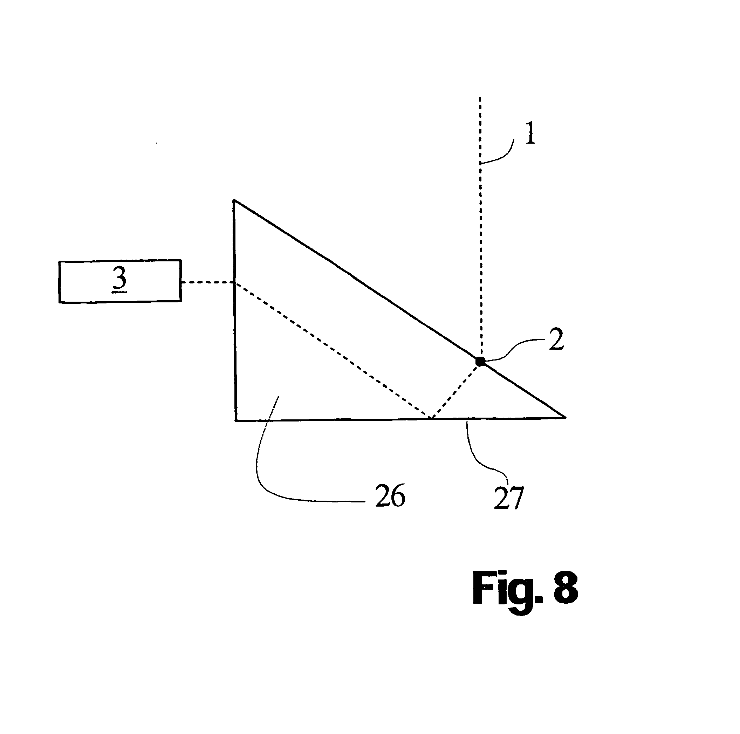

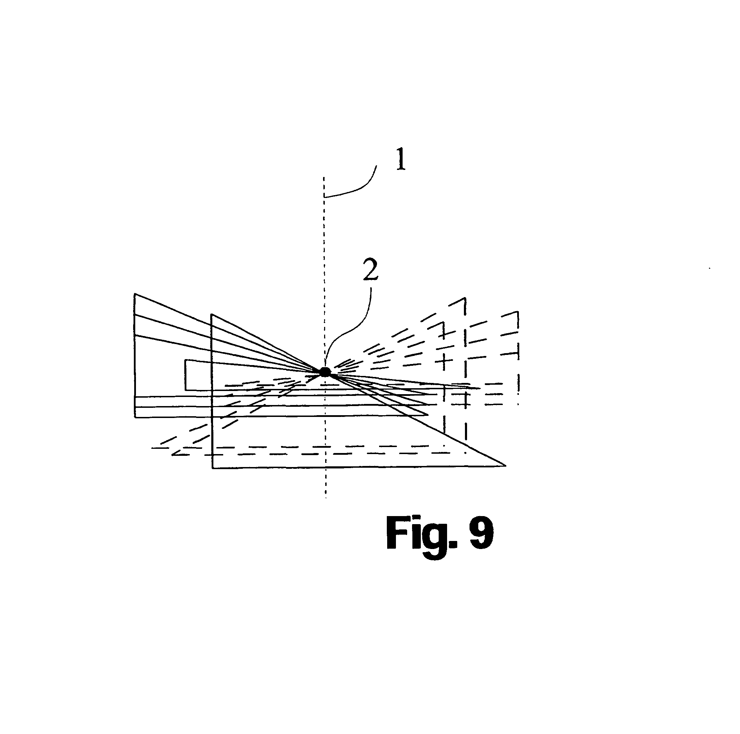

Das optische Bauteil in Fig. 8 ist hierbei als Prisma 26 ausgeführt. Das auf seiner Oberfläche auftreffende Licht 1 wird von dem Prisma 26 gebrochen. Durch total interne Reflexion an der verspiegelten Außenfläche 27 wird das so gebrochene Licht zu dem dem Prisma 26 zugeordneten Detektor 3 geleitet. In der Fig. 9 ist eine Seitenansicht mit mehreren pyramidenförmigen Prismen gezeigt.

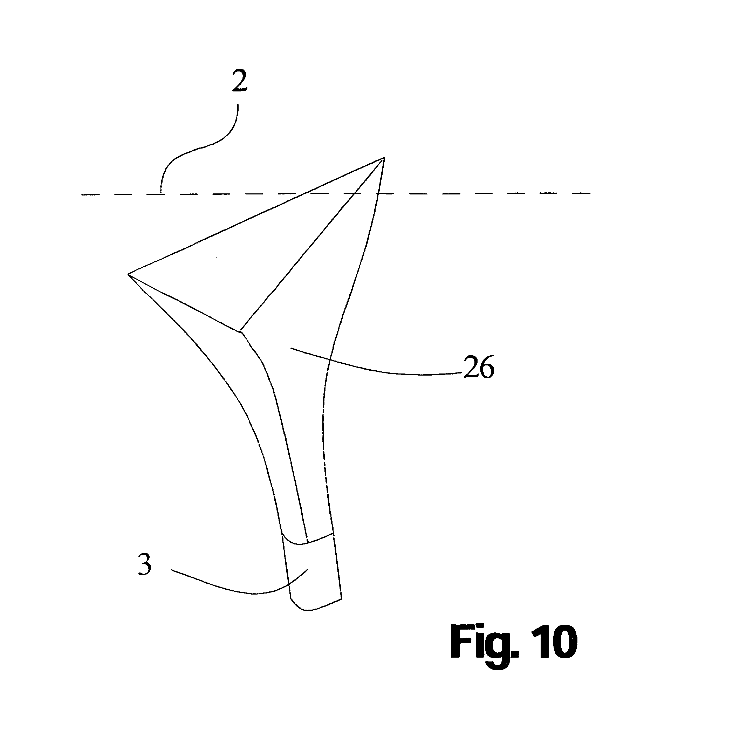

Die Fig. 10 zeigt einen aus Plexiglas bestehenden Lichtsammler 26, der direkt mit dem ihm zugeordneten Detektor 3 verbunden ist. Auch bei dem Lichtsammler 26 wird das auf seine Oberfläche auftreffende Licht gebrochen und durch total interne Reflexion zum Detektor 3 geleitet.

Im Gegensatz hierzu sind die optischen Bauteile 11 bis 20 als Spiegel ausgeführt, die das auf ihre Oberfläche auftreffende Licht zu den ihnen zugeordneten Detektoren 28 bis 37 reflektieren. Dies ist der Fig. 4 entnehmbar.

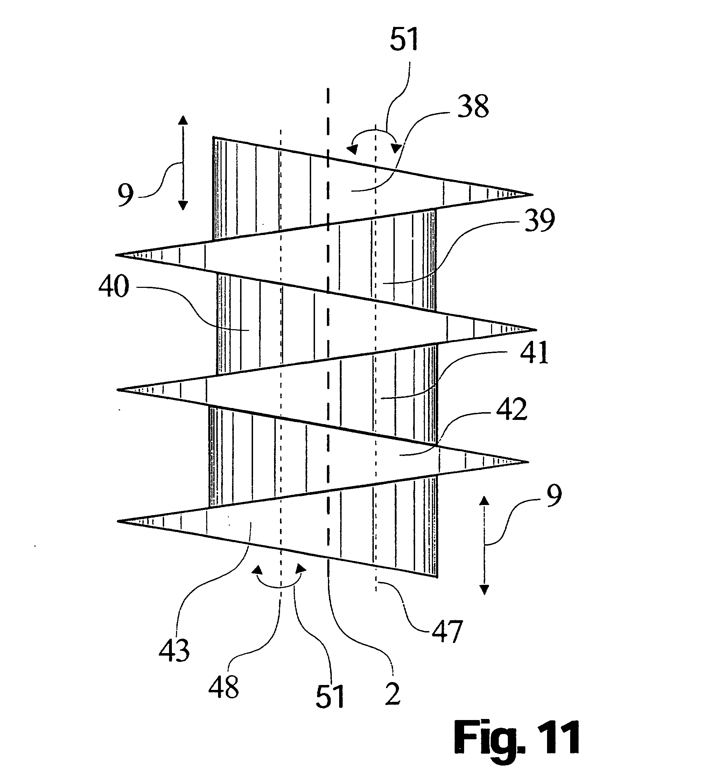

Die Fig. 11 zeigt eine Draufsicht eines alternativen Ausführungsbeispiels. Hierbei sind die optischen Bauteile 38 bis 43 als Spiegel ausgeführt, die eine zylindrische Oberfläche aufweisen. Bei den optischen Bauteilen 38 bis 43 handelt es sich um Zylinderabschnitte, deren Zylinderabschnittsmantel mit einer verspiegelten Oberfläche versehen ist.

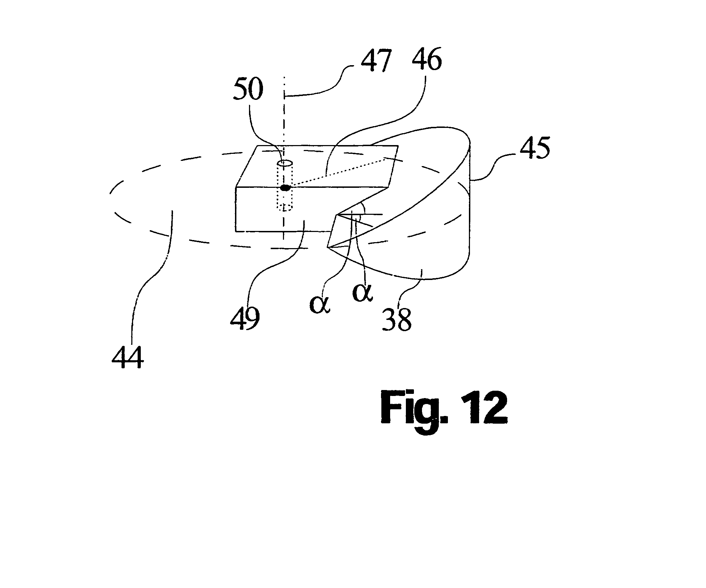

Das optische Bauteil 38 ist in der schematischen dreidimensionalen Ansicht der Fig. 12 gezeigt. Bei dem Zylinderabschnitt handelt es sich lediglich um ein beidseitig schräg abgeschnittenes Zylindersegment. Bezüglich seiner Symmetriefläche 44 weist der Zylinderabschnitt zwei ebene Flächen auf, die jeweils in einem Winkel α von 10° zur Symmetriefläche 44 verlaufen und sich in einer gemeinsamen Strecke, ebenfalls in der Symmetriefläche 44, treffen. Die verspiegelte Oberfläche 45 des Zylinderabschnitts 38 weist in der Symmetriefläche 44 den Radius 46 auf. Für das optische Bauteil 38 ist ein Befestigungsmittel 49 vorgesehen, das eine Führungsbohrung 50 aufweist. Das gesamte Bauteil 49, 38 ist über die Führungsbohrung 50 drehbar und verschiebbar relativ zu der nicht in der Fig. 12 eingezeichneten Achse 47 angeordnet.

Der Fig. 11 ist entnehmbar, dass die zylinderförmigen optischen Bauteile 38, 40 und 42 auf der Achse 47 geführt sind. Die zylinderförmigen optischen Bauteile 39, 41 und 43 sind auf der Führungsachse 48 geführt. Die zylinderförmigen optischen Bauteile können bezüglich ihrer Achse 47 bzw. 48 in die Richtungen 51 gedrehtwerden, wodurch der zum Detektor gelangende

Spektralbereich jeweils vergrößerbar oder verkleinerbar ist. Darüber hinaus sind die zylinderförmigen optischen Bauteile entlang der Richtung 9 ihrer Führungsachse 47 bzw. 48 bzw. parallel zur Fokuslinie 2 bewegbar, wodurch der zum Detektor gelangende Spektralbereich bei gleicher Breite veränderbar ist.

Den Fig. 4 und 7 kann entnommen werden, dass die Oberflächennormalen der verschiedenen optischen Bauteile 11 bis 20 am Ort der Fokallinie 2 in unterschiedliche Richtungen zeigen. Dementsprechend ist in Fig. 4 gezeigt, dass die unterschiedlichen spektralen Bereiche der Fokallinie 2 des einfallenden Lichtstrahls 1 in unterschiedliche Richtungen zu den Detektoren 28 bis 37 reflektiert werden. Die Detektion mit den Detektoren 28 bis 37 erfolgt hierbei simultan.

## Patentansprüche

1. Vorrichtung zur Selektion und Detektion mindestens eines Spektralbereichs eines spektral aufgefächerten Lichtstrahls (1), vorzugsweise im Strahlengang eines konfokalen Rastermikroskops, wobei im aufgefächerten Lichtstrahl (1) ein den Lichtstrahl zu mindestens einem Detektor (3) reflektierendes optisches Bauteil (4) angeordnet ist, dessen optisch wirksamer Bereich (4a) entlang der Oberfläche (4b) veränderbar ist, und der aufgefächerte Lichtstrahl (1) in einer einzigen Fokallinie (2) fokussiert ist
**dadurch gekennzeichnet, dass** das optisches Bauteil aus verschiedenen optischen Bauteilen aufgebaut ist, wobei durch Ausrichtung der verschiedenen Bauteile zur Fokallinie (2) und die sich daraus ergebende Überdeckung von Fokallinie (2) und der Oberfläche (4b) der einzelnen optischen Bauteile der zum Detektor (3) gelangende Spektralbereich (5) definierbar ist, dass die Oberfläche (4b) der einzelnen optischen Bauteile des optischen Bauteils (4) in ihrem Bereich der Überdeckung mit der Fokallinie (2) stets tangential zur Fokallinie (2) angeordnet ist, und dass der optisch wirksame Bereich des optischen Bauteils eine zylindrische Oberfläche aufweist.

2. Vorrichtung nach Anspruch 1, **dadurch gekennzeichnet, dass** das optische Bauteil (4) beweglich angeordnet ist.

3. Vorrichtung nach Anspruch 2, **dadurch gekennzeichnet, dass** die Bewegung des optischen Bauteils (4) entlang einer Richtung (8) erfolgt, so dass sich der wirksame Bereich (4a) der verschiedenen optischen Bauteile relativ zur Fokallinie (2) verändert, wodurch sich der zum Detektor (3) gelangende Spektralbereich (5) vergrößert oder verkleinert.

4. Vorrichtung nach Anspruch 2 oder 3, **dadurch gekennzeichnet, dass** das optische Bauteil (4) in einer zur Fokallinie (2) parallelen Richtung (9) bewegbar ist, wodurch der zum Detektor (3) gelangende Spektralbereich (5) veränderbar ist.

5. Vorrichtung nach Anspruch 4, **dadurch gekennzeichnet, dass** bei einer Bewegung des optischen Bauteils (4) in einer zur Fokallinie (2) parallelen Richtung (9) der dem optischen Bauteil (4) zugeordnete Detektor (3) in gleicher Weise bewegt.

6. Vorrichtung nach einem der Ansprüche 1 bis 5, **dadurch gekennzeichnet, dass** entlang der Fokallinie (2) zwischen den verschiedenen optischen Bauteilen (11, 12) ein Zwischenraum (21) verbleibt.

7. Vorrichtung nach einem der Ansprüche 1 bis 6, **dadurch gekennzeichnet, dass** die Kanten (22, 23) der verschiedenen optischen Bauteile verjüngend ausgebildet sind.

8. Vorrichtung nach Anspruch 7, **dadurch gekennzeichnet, dass** die verschiedenen optischen Bauteile eine dreieckige Oberfläche aufweist.

9. Vorrichtung nach einem der Ansprüche 1 bis 8, **dadurch gekennzeichnet, dass** die Oberflächennormalen der verschiedenen optischen Bauteile (11, 12, 13, 14, 15; 16, 17, 18, 19, 20) am Ort der Fokallinie (2) in unterschiedliche Richtungen zeigen.

10. Vorrichtung nach einem der Ansprüche 1 bis 9, **dadurch gekennzeichnet, dass** die Detektion mehrerer Detektoren (28, 29, 30, 31, 32, 33, 34, 35, 36, 37) simultan erfolgt.

## Claims

1. Device for selecting and detecting at least one spectral region of a spectrally spread light beam (1), preferably in the beam path of a confocal scanning microscope, there being arranged in the spread light beam (1) an optical component (4) which reflects the light beam to at least one detector (3), and the optically effective region (4a) of which can be varied along the surface (4b), and the spread light beam (1) being focussed on a single focal line (2),
**characterized in that** the optical component is constructed from different optical components, it being possible for the spectral region (5) passing to the detector (3) to be defined by orientation of the different components with respect to the focal line (2) and the resultant superposition of the focal line (2) and the surface (4b) of the individual optical components, **in that** the surface (4b) of the individual optical components of the optical component (4), in its region of superposition with the focal line (2), is always arranged tangentially with respect to the focal line (2) and **in that** the optically effective region of the optical component has a cylindrical surface.

2. Device according to Claim 1, **characterized in that** the optical component (4) is arranged in movable fashion.

3. Device according to Claim 2, **characterized in that** the movement of the optical component (4) is effected along a direction (8), thus resulting in variation of the effective region (4a) of the different optical components relative to the focal line (2), whereby the spectral region (5) passing to the detector (3) increases or decreases.

4. Device according to Claim 2 or 3, **characterized in that** the optical component (4) can be moved in a direction (9) parallel to the focal line (2), whereby the spectral region (5) passing to the detector (3) can be varied.

5. Device according to Claim 4, **characterized in that**, in the event of a movement of the optical component (4) in a direction (9) parallel to the focal line (2), the detector (3) assigned to the optical component (4) moves in the same way.

6. Device according to one of Claims 1 to 5, **characterized in that** an interspace (21) remains between the different optical components (11, 12) along the focal line (2).

7. Device according to one of Claims 1 to 6, **characterized in that** the edges (22, 23) of the different optical components are formed in tapering fashion.

8. Device according to Claim 7, **characterized in that** the different optical components have a triangular surface.

9. Device according to one of Claims 1 to 8, **characterized in that** the normals to the surfaces of the different optical components (11, 12, 13, 14, 15; 16, 17, 18, 19, 20) point in different directions at the location of the focal line (2).

10. Device according to one of Claims 1 to 9, **characterized in that** the detection of a plurality of detectors (28, 29, 30, 31, 32, 33, 34, 35, 36, 37) is effected simultaneously.

## Revendications

1. Dispositif pour sélectionner et détecter au moins une plage spectrale d'un rayon de lumière (1) dispersé de manière spectrale, de préférence dans le trajet de rayon d'un microscope à balayage à foyer commun, un composant optique (4) réfléchissant le rayon de lumière vers au moins un détecteur (3) étant disposé dans le rayon de lumière dispersé (1), la zone optiquement active (4a) de celui-ci étant modifiable le long de la surface (4b) et le rayon de lumière dispersé (1) étant concentré en une seule ligne focale (2), **caractérisé en ce que** le composant optique est constitué de différents composants optiques, l'alignement des différents composants optiques par rapport à la ligne focale (2) et le recouvrement qui en résulte de la ligne focale (2) et de la surface (4b) de chacun des composants optiques permettant de définir la plage spectrale (5) qui parvient au détecteur (3), **en ce que** la surface (4b) de chacun des composants optiques du composant optique (4) dans sa zone du recouvrement avec la ligne focale (2) est toujours disposée de manière tangentielle par rapport à la ligne focale (2), et **en ce que** la zone optiquement active du composant optique présente une surface cylindrique.

2. Dispositif selon la revendication 1, **caractérisé en ce que** le composant optique (4) est monté de manière à être mobile.

3. Dispositif selon la revendication 2, **caractérisé en ce que** le mouvement du composant optique (4) s'effectue le long d'une direction (8) de manière à ce que la zone active (4a) des différents composants optiques par rapport à la ligne focale (2) soit modifiée, ce qui agrandit ou réduit la plage spectrale (5) qui parvient au détecteur (3).

4. Dispositif selon la revendication 2 ou 3, **caractérisé en ce que** le composant optique (4) peut être déplacé dans une direction (9) parallèle à la ligne focale (2), ce qui permet de modifier la plage spectrale (5) qui parvient au détecteur (3).

5. Dispositif selon la revendication 4, **caractérisé en ce que** lors d'un mouvement du composant optique (4) dans une direction (9) parallèle à la ligne focale (2), le détecteur (3) associé au composant optique (4) se déplace de la même manière.

6. Dispositif selon l'une des revendications 1 à 5, **caractérisé en ce qu'**un espace intermédiaire (21) demeure le long de la ligne focale (2) entre les différents composants optiques (11, 12).

7. Dispositif selon l'une des revendications 1 à 6, **caractérisé en ce que** les bords (22, 23) des différents composants optiques sont configurés en se rétrécissant.

8. Dispositif selon la revendication 7, **caractérisé en ce que** les différents composants optiques présentent une surface triangulaire.

9. Dispositif selon l'une des revendications 1 à 8, **caractérisé en ce que** les normales à la surface des différents composants optiques (11, 12, 13, 14, 15 ; 16, 17, 18, 19, 20) sont dirigées dans des directions différentes à l'endroit de la ligne focale (2).

10. Dispositif selon l'une des revendications 1 à 9, **caractérisé en ce que** la détection par plusieurs détecteurs (28, 29, 30, 31, 32, 33, 34, 35, 36, 37) s'effectue simultanément.
